# EUROPÄISCHE PATENTSCHRIFT

(11) **EP 2 281 136 B1**
(45) Veröffentlichungstag und Bekanntmachung des Hinweises auf die Patenterteilung: **21.03.2012**
(21) Anmeldenummer: 09753753.4
(22) Anmeldetag: 21.04.2009
(51) Int. Cl.: F16L 37/088, F16L 37/091, F16L 37/14, F16L 37/15

(54) **STECKVERBINDUNG FÜR FLUID-LEITUNGEN**
PLUG CONNECTION FOR FLUID CONDUITS
RACCORD À EMBOÎTEMENT POUR CONDUITES DE FLUIDE

(30) Priorität: 26.05.2008 DE 202008007062 U
(43) Veröffentlichungstag der Anmeldung: 09.02.2011
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Patentanwälte Dr. Solf & Zapf
(86) Internationale Anmeldenummer: PCT/EP2009/054705
(87) Internationale Veröffentlichungsnummer: WO 2009/144098

(56) Entgegenhaltungen:
- WO-A1-00/36328
- WO-A2-2007/117688
- DE-A1-102006 016 647
- US-A- 5 513 882

## Beschreibung

Die vorliegende Erfindung betrifft gemäß dem Oberbegriff des Anspruchs 1 eine Steckverbindung für Fluid-Leitungen, mit einem Steckerteil, das mit einem Steckerschaft umfangsgemäß abgedichtet in Richtung einer Steckachse in eine Aufnahmeöffnung eines Gehäuseteils einsteckbar ist, sowie mit einer Verriegelungseinrichtung zum lösbaren Arretieren des Steckerteils in seiner eingesteckten Verbindungslage, wobei die Verriegelungseinrichtung aus einem auf dem Steckerschaft angeordneten, radial verformbaren Halteelement und einem Verriegelungselement besteht, wobei das Halteelement und der Steckerschaft in axialer Richtung relativ zueinander derart zwischen einer Lösestellung und einer Haltestellung bewegbar sind, dass der Steckerschaft - entweder in der Lösestellung in die Aufnahmeöffnung einführbar oder aus der Aufnahmeöffnung entnehmbar ist - oder in der Haltestellung formschlüssig in seiner Verbindungslage arretierbar ist, indem das Halteelement zumindest bereichsweise formschlüssig zwischen korrespondierenden Halteflächen der Aufnahmeöffnung und des Steckerschaftes sitzt, und wobei das Verriegelungselement in einer Riegelstellung die axiale Relativbewegung zwischen dem Halteelement und dem Steckerschaft in der Haltestellung gegen ein Überführen in die Lösestellung formschlüssig blockiert.

Mit derartigen Steckverbindungen können Leitungen (beispielsweise Rohr- oder Schlauchleitungen) für hydraulische und/oder pneumatische Strömungs- bzw. Druckmedien lösbar (trennbar) miteinander verbunden und/oder an beliebige Aggregate angeschlossen werden.

Eine Steckverbindung der genannten Art ist beispielsweise in der DE 10 2006 016 647 A1 beschrieben. Charakteristisch ist hierbei, dass der Steckerschaft zusammen mit dem Halteelement in der relativen Lösestellung in die Aufnahmeöffnung eingeführt wird, und dass dann der Steckerschaft relativ zu dem Halteteil zurückgezogen wird, wodurch das Halteelement radial gespreizt wird, so dass es dann bereichsweise zwischen Halteflächen von Aufnahmeöffnung und Steckerschaft formschlüssig sitzt. Dadurch ist das Steckerteil formschlüssig gegen Lösen fixiert. Um zusätzlich auch die Relativbewegung, d. h. ein Wieder-Einstecken des Steckerschaftes relativ zu dem Halteelement zu verhindern, wodurch ja dann auch das Halteelement sich wieder radial nach innen in seine Lösestellung bewegen und den Stecker zum Lösen freigeben würde, kann ein Verriegelungselement formschlüssig zwischen das Halteelement und ein Widerlagerelement (Haltestufe) des Steckerteils gebracht werden. Dies ist nur in der Haltestellung von Steckerteil und Halteelement möglich, so dass hierdurch auch eine sichere Steckkontrolle gewährleistet ist. Die bekannte Steckverbindung hat sich in der Praxis gut bewährt, allerdings besteht noch ein Verbesserungsbedarf vor allem hinsichtlich der Handhabung.

Eine ähnliche Steckverbindung ist zudem auch in der DE 10 2006 040 051 A1 beschrieben.

Der vorliegenden Erfindung liegt die Aufgabe zu Grunde, eine Steckverbindung der genannten Art zu schaffen, die unter Beibehaltung von zumindest gleichwertigen Funktionseigenschaften insbesondere hinsichtlich der Handhabung verbessert und vereinfacht ist.

Erfindungsgemäß wird dies gemäß dem unabhängigen Anspruch 1 dadurch erreicht, dass das Verriegelungselement relativ zu dem Steckerteil zwischen einer Freigabestellung und der Riegelstellung beweglich sowie derart ausgebildet ist, dass es während seiner Bewegung von der Freigabestellung in die Riegelstellung auch als Antriebselement für eine Zwangsbewegung von Halteelement und Steckerschaft aus deren Lösestellung in deren Haltestellung fungiert. Somit muss ein Monteur aktiv nur noch das Verriegelungselement von der Freigabestellung in die Riegelstellung bewegen; die axiale Relativbewegung zwischen Halteelement und Steckerschaft erfolgt dabei automatisch durch das als Antriebselement wirkende Verriegelungselement.

In bevorzugter Ausgestaltung ist das Verriegelungselement als ein auf dem Steckerteil in einem axial zwischen dem Halteelement und einem Widerlagerelement des Steckerteils liegenden Bereich quer zur Steckachse verschiebbarer Keilschieber ausgebildet, der für die Zwangsbewegung über eine Keilfläche einen axialen Abstand zwischen dem Halteelement und dem Widerlagerelement vergrößert. Dadurch wird der Steckerschaft durch eine manuell bewirkte Querbewegung des Keilschiebers automatisch relativ zu dem Halteelement zurückgezogen, wobei vorteilhafterweise die Keilfläche eine Kraftverstärkung bewirkt. Dadurch reicht ein leichter Fingerdruck für die Betätigung aus. Das Verriegelungselement bzw. der Keilschieber bildet somit ein integriertes Montagewerkzeug, wodurch sich die Handhabung der Steckverbindung bei der Montage, d. h. beim Einstecken und Verriegeln des Steckerteils, wesentlich vereinfacht.

Bei der erfindungsgemäßen Steckverbindung ist weiterhin auch gewährleistet, dass ein Verriegeln nur dann möglich ist, wenn sich das Halteelement sicher in seiner Haltestellung befindet. Dies führt zu einer absolut sicheren (100%igen) Steckkontrolle.

Weitere vorteilhafte Ausgestaltungen der Erfindung sind in den abhängigen Ansprüchen und der anschließenden Beschreibung enthalten.

An Hand von zwei in der Zeichnung veranschaulichten, bevorzugten Ausführungsbeispielen soll die Erfindung im Folgenden genauer erläutert werden. Dabei zeigen:
- Fig. 1: einen Längsschnitt durch eine erste Ausführungsform einer erfindungsgemäßen Steckverbindung mit eingestecktem, jedoch noch nicht verriegeltem Steckerteil,
- Fig. 2: eine Darstellung wie in Fig. 1 in der eingesteckten und arretierten sowie verriegelten Verbindungslage des Steckerteils,
- Fig. 3: eine perspektivische Explosionsdarstellung der wesentlichen Einzelteile der Steckverbindung gemäß Fig. 1 und 2,
- Fig. 4: eine Perspektivansicht der Steckverbindung entsprechend dem in Fig. 1 dargestellten Zustand,
- Fig. 5: eine weitere Perspektivansicht wie in Fig. 4, allerdings zu dem Zustand gemäß Fig. 2,
- Fig. 6: eine gesonderte Perspektivansicht einer möglichen Ausführungsform eines Halteelementes gemäß dem Ausführungsbeispiel nach Fig. 1 bis 5,
- Fig.7: eine gesonderte Perspektivansicht eines zusätzlichen Hülsenelementes für die Ausführung des Halteelementes nach Fig. 6,
- Fig. 8: eine gesonderte Perspektivansicht einer ersten Ausführungsform eines Keilschiebers für die Ausführung der Steckverbindung gemäß Fig. 1 bis 5,
- Fig. 9: eine zweite Ausführungsform der erfindungsgemäßen Steckverbindung in einer Darstellung entsprechend Fig. 1,
- Fig. 10: die zweite Ausführungsform der Steckverbindung gemäß Fig. 9 in einer Darstellung analog zu Fig. 2,
- Fig. 11: eine Perspektivansicht der Steckverbindung gemäß Fig. 9 und 10 in einem Zustand vor dem Einstecken bzw. nach dem Lösen des Steckerteils,
- Fig. 12: eine Perspektivansicht zu dem in Fig. 9 dargestellten Zustand,
- Fig. 13: eine weitere Perspektivansicht zu dem Zustand gemäß Fig. 10,
- Fig. 14: eine gesonderte Perspektivdarstellung einer zweiten Ausführungsform eines Halteelementes, wie es beispielhaft in der Ausführung nach Fig. 9 bis 13 verwendet wird,
- Fig.15: eine gesonderte Perspektivansicht eines zweiteiligen Keilschiebers beispielhaft für die Ausführung nach Fig. 9 bis 13, und
- Fig. 16 bis 18: Darstellungen ähnlich Fig. 9 und 10 in unterschiedlichen Zuständen während des Steck- und Verriegelungsvorganges.

In den verschiedenen Figuren der Zeichnung sind gleiche Teile stets mit den gleichen Bezugszeichen versehen und brauchen daher in der Regel auch jeweils nur einmal beschrieben zu werden. Somit gilt jede Beschreibung eines bestimmten Teils analog auch für andere Zeichnungsfiguren, in denen dieses Teil mit dem entsprechenden Bezugszeichen ebenfalls zu erkennen ist.

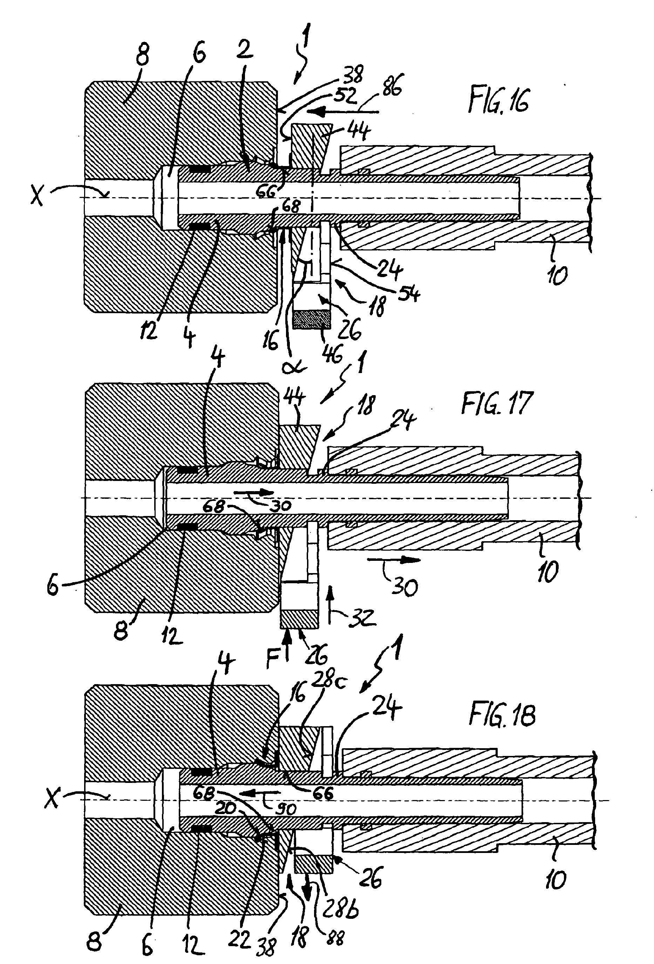

Eine Steckverbindung 1 weist ein Steckerteil 2 auf, das mit einem Steckerschaft 4 umfangsgemäß dichtend in Richtung einer Steckachse X in eine Aufnahmeöffnung 6 eines Gehäuseteils 8 einsteckbar ist. Wie beispielhaft in Fig. 16 bis 18 dargestellt ist, kann an dem Steckerteil 2 auf seiner dem Steckerschaft 4 gegenüberliegenden Seite eine Fluid-Leitung 10 angeschlossen sein. Das Gehäuseteil 8 kann Bestandteil eines beliebigen Aggregates sein oder ebenfalls mit einer Leitung verbunden werden (nicht dargestellt). Zur umfangsgemäßen Abdichtung in der Aufnahmeöffnung 6 trägt der Steckerschaft 4 in seinem freien Endbereich einen Dichtring 12 und gegebenenfalls einen Stützring 14. Der Dichtring 12 dichtet einen Ringspalt zwischen Steckerschaft 4 und Aufnahmeöffnung 6 nach außen druckdicht ab.

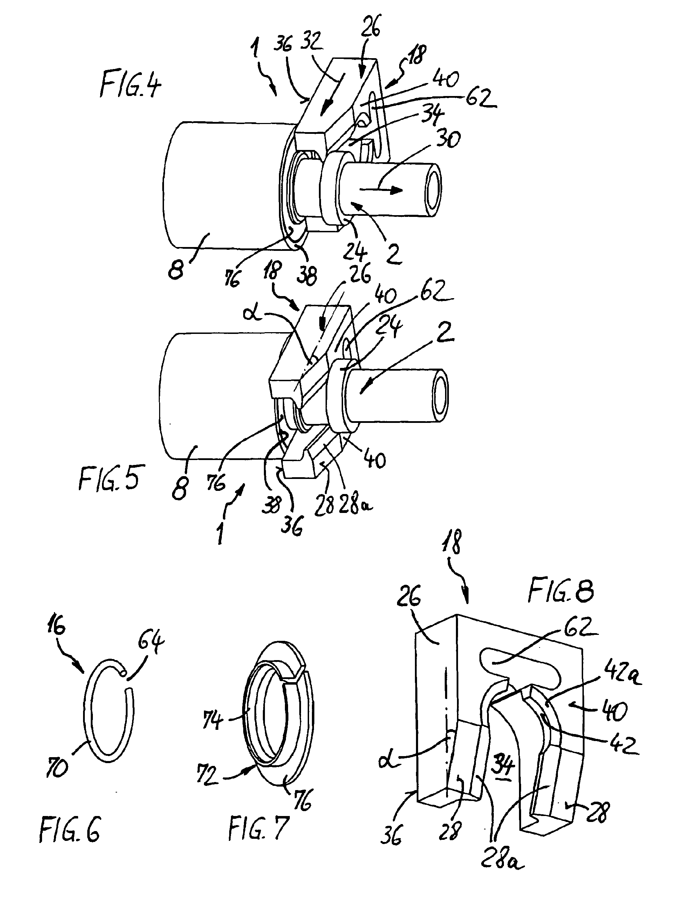

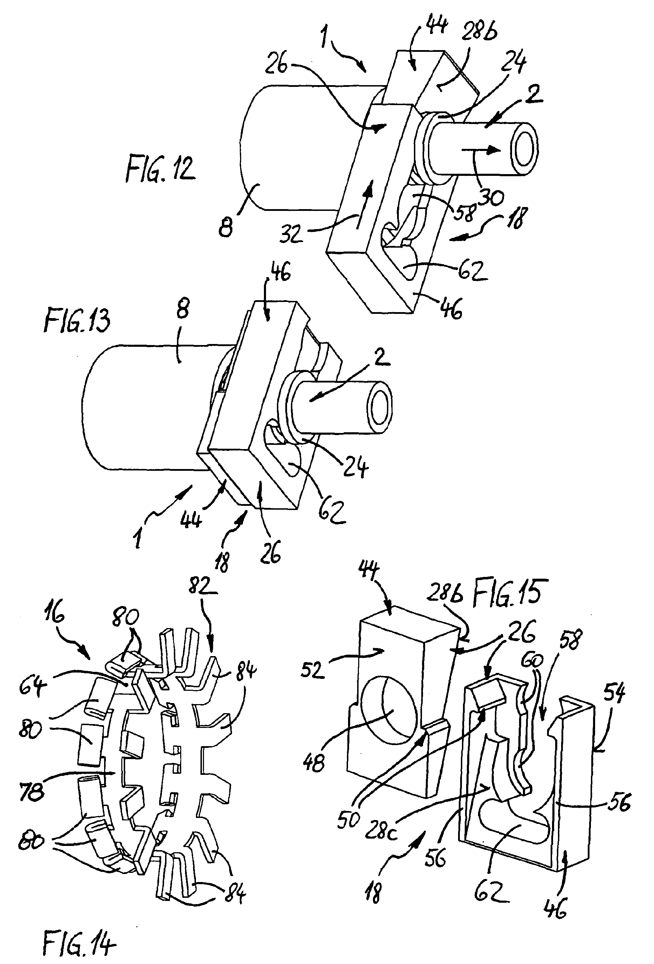

Das Steckerteil 2 ist in einer mit dem Steckerschaft 4 in das Gehäuseteil 8 eingesteckten Verbindungslage mittels eines auf dem Steckerschaft 4 sitzenden Halteelementes 16 lösbar arretierbar. Zu diesem Halteelement 16 wird auch auf die gesonderten, vergrößerten Darstellungen in Fig. 6 und Fig. 14 verwiesen, wobei die Ausführungen im Folgenden noch genauer erläutert werden. Das Halteelement 16 bildet zusammen mit einem Verriegelungselement 18 eine Verriegelungseinrichtung zum lösbaren Arretieren des Steckerteils 2 in seiner eingesteckten Verbindungslage.

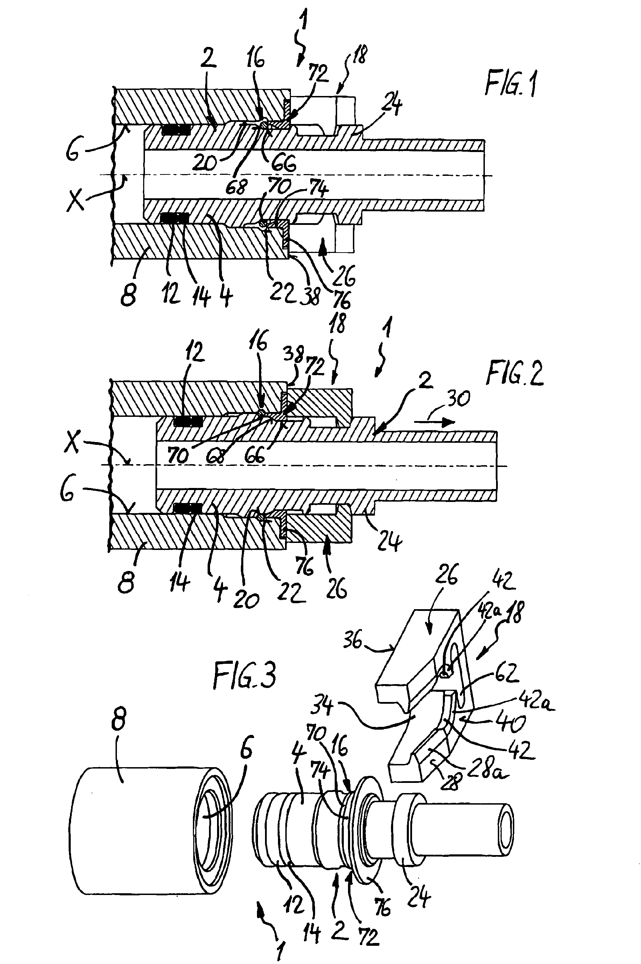

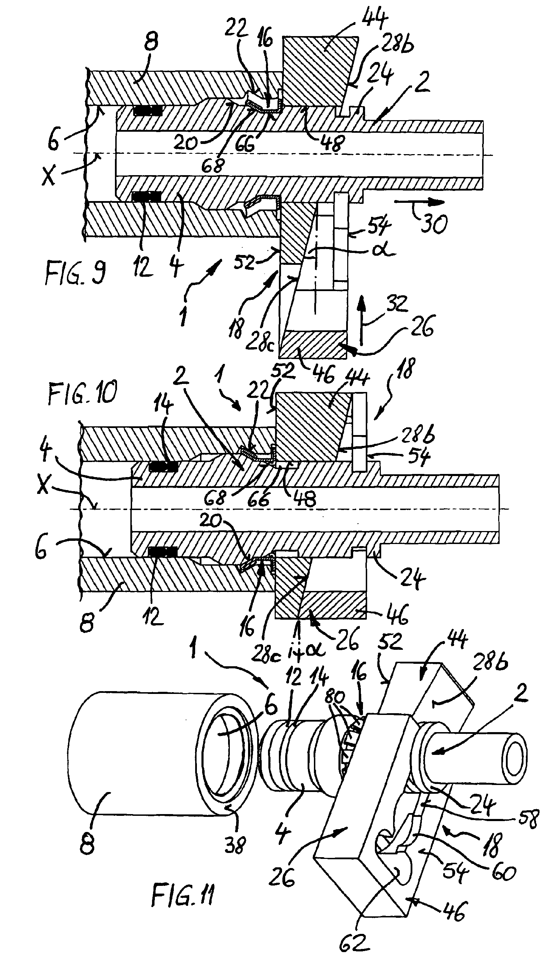

Das Halteelement 16 und der Steckerschaft 4 sind in axialer Richtung (entsprechend der Steckachse X) relativ zueinander derart zwischen einer Lösestellung (vgl. Fig. 1 bzw. Fig. 9, 16 und 17) und einer Haltestellung (vgl. Fig. 2 bzw. Fig. 10 und 18) bewegbar, dass der Steckerschaft 4 einerseits in der Lösestellung zusammen mit dem Halteelement 16 in die Aufnahmeöffnung 6 einführbar oder aus der Aufnahmeöffnung 6 entnehmbar ist (Fig. 16) oder andererseits in der Haltestellung formschlüssig in seiner Verbindungslage arretiert ist, indem das Halteelement 16 zumindest bereichsweise formschlüssig zwischen korrespondierenden Halteflächen 20 und 22 der Aufnahmeöffnung 6 und des Steckerschaftes 4 sitzt. Hierzu wird auf die Darstellungen in Fig. 1 und 2 sowie in Fig. 9 und 10 verwiesen.

Das Verriegelungselement 18 dient hierbei dazu, in einer Riegelstellung (Fig. 2, 10 und 18) die beschriebene axiale Relativbewegung zwischen dem Halteelement 16 und dem Steckerschaft 4 in deren Haltestellung gegen ein Überführen in die Lösestellung formschlüssig zu blockieren. Hierbei muss das Verriegelungselement 18 lediglich relativ geringe äußere Kräfte zwischen Stecker 2 und Gehäuseteil 8 entgegen der Druckrichtung, nicht aber höhere Innendruckkräfte aufnehmen.

Das Verriegelungselement 18 ist auf dem Steckerteil 2 zwischen einer Freigabestellung und der Riegelstellung beweglich angeordnet und dabei erfindungsgemäß derart ausgebildet, dass es während der Bewegung von der Freigabestellung in die Riegelstellung auch als Betätigungs- bzw. Antriebselement für eine Zwangsbewegung von Halteelement 16 und Steckerschaft 4 aus deren Lösestellung in deren Haltestellung fungiert. In bevorzugter Ausgestaltung ist dazu das Verriegelungselement 18 als ein auf dem Steckerteil 2 in einem axial zwischen dem Halteelement 16 und einem Widerlagerelement 24 des Steckerteils 2 liegenden Bereich quer zur Steckachse X verschiebbarer Keilschieber 26 ausgebildet. Dieser Keilschieber 26 weist eine Keilfläche 28 auf, die gemäß Fig. 5, 9 und 10 mit einer zur Steckachse X senkrechten Ebene einen Keilwinkel α einschließt. Vorzugsweise liegt dieser Keilwinkel α in einer Größenordnung, um im Bereich der Keilfläche 28 eine Selbsthemmung zu erreichen. Dazu kann der Keilwinkel α im Bereich von 5° bis 25° liegen. Bevorzugt gilt 10° ≤ α ≤ 15°, und insbesondere kann α etwa 13° betragen. Durch diese Ausgestaltung vergrößert der Keilschieber 26 bei seiner Querverschiebung für die besagte Zwangsbewegung über die Keilfläche 28 einen axialen Abstand zwischen dem Halteelement 16 und dem Widerlagerelement 24 des Steckerteils 2, so dass der Steckerschaft 4 relativ zu dem Halteelement 16 bewegt, und zwar in Pfeilrichtung 30 zurückgezogen wird. Vorteilhafterweise wird hierdurch eine Kraftverstärkung erreicht, indem mit einer relativ kleinen Kraft F (siehe Fig. 17) der Keilschieber 26 quer in Pfeilrichtung 32 bewegt werden kann, um die besagte axiale Zugbewegung des Steckerteils 2 in Pfeilrichtung 30 zu bewirken.

In der ersten Ausführungsform gemäß Fig. 1 bis 8 ist der Keilschieber 26 als einteiliges Formteil, insbesondere als Kunststoff-Spritzgussteil, und im Wesentlichen U-förmig mit einer auf das Steckerteil 2 von der Seite her aufzusetzenden Schlitzöffnung 34 ausgebildet. Der einteilige Keilschieber 26 weist zudem einseitig eine im montierten Zustand radial, senkrecht zur Steckachse X verlaufende Anlagefläche 36 zur - bei diesem Beispiel mittelbaren - Anlage an dem Halteelement 16 und vorzugsweise auch an einer die Aufnahmeöffnung 6 umschließenden Stirnfläche 38 des Gehäuseteils 8 auf. Auf der anderen, der Anlagefläche 36 gegenüberliegenden Seite weist der Keilschieber 26 die Keilfläche 28 zur Anlage an dem Widerlagerelement 24 des Steckerteils 2 auf. Vorzugsweise schließt sich an die Keilfläche 28 eine Haltefläche 40 an, die zur gegenüberliegenden Anlagefläche 36 parallel verläuft. In der ganz in Pfeilrichtung 32 eingeschobenen Riegelstellung liegt der Keilschieber 26 mit der Anlagefläche 36 und der Haltefläche 40 formschlüssig axial zwischen dem Halteelement 16 und vorzugsweise dem Gehäuseteil 8 einerseits und dem Widerlagerelement 24 des Steckerteils 2 andererseits. In bevorzugter Ausgestaltung weist die Keilfläche 28 auf der Seite der Schlitzöffnung 34 abgeschrägte Fasen 28a auf, an denen das bevorzugt von einem Ringansatz gebildete Widerlagerelement 24 des Steckerteils 2 anliegt (siehe insbesondere Fig. 4).

Es ist weiterhin vorteilhaft, wenn die Schlitzöffnung 34 im Bereich der Haltefläche 40 eine Erweiterung 42 aufweist, die in der Riegelstellung durch eine elastische Verformung der zwischen sich die Schlitzöffnung 34 begrenzenden Schieberarme rastend mit dem Steckerteil 2, insbesondere mit dessen Widerlagerelement 24, zusammenwirkt. Hierdurch wird eine zusätzliche Fixierung des Keilschiebers 26 in der Riegelstellung gegen ein ungewolltes Zurückschieben in die Freigabestellung erreicht. Auch im Bereich der Erweiterung 42 kann eine entsprechende Fase 42a gebildet sein.

Was nun die zweite Ausführungsform gemäß Fig. 9 bis 18 betrifft, so ist dabei der Keilschieber 26 zweiteilig aus einem Festteil 44 und einem querbeweglichen Schieberteil 46 ausgebildet. Das Festteil 44 sitzt mit einer Lochöffnung 48 unverlierbar und in Querrichtung (radial) unbeweglich auf dem Steckerteil 2. Das Schieberteil 46 ist insbesondere über geeignete Rastmittel 50 unverlierbar an dem Festteil 44 gehalten. Die Rastmittel 50 sind nur in Fig. 15 zu erkennen. Das Festteil 44 und das Schieberteil 46 weisen korrespondierende, aneinanderliegende Keilflächen 28b und 28c auf. Auf ihren anderen, gegenüberliegenden Seiten weisen das Festteil 44 und das Schieberteil 46 zueinander parallele Anlageflächen 52, 54 zur Anlage einerseits an dem Halteelement 16 (in diesem Ausführungsbeispiel des Halteelementes unmittelbar) und vorzugsweise auch an der Stirnfläche 38 des Gehäuseteils 8 sowie andererseits an dem Widerlagerelement 24 des Steckerteils 2 auf. Wie sich insbesondere aus Fig. 15 ergibt, weist das Schieberteil 46 beidseitig der Keilfläche 28c Seitenwände 56 auf, die gemeinsam mit der Keilfläche 28c eine Aufnahmevertiefung zur bereichsweisen Aufnahme des Festteils 44 bilden. Somit übergreift das Schieberteil 46 das Festteil 44 bereichsweise, siehe dazu Fig. 12 und 13. Analog zu dem einstückigen Keilschieber 26 gemäß Fig. 8 sitzt auch das Schieberteil 46 des zweiteiligen Keilschiebers mit einer Schlitzöffnung 58 auf dem Steckerteil 2. Vorzugsweise weist die Schlitzöffnung 58 zwei Erweiterungen 60 auf, die jeweils in der Freigabestellung oder in der Riegelstellung zur Fixierung rastend mit dem Steckerteil 2 zusammenwirken, indem auch hierbei die die Schlitzöffnung 58 begrenzenden Schenkel des Schieberteils 46 federelastisch sind.

Beide Teile 44, 46 des zweiteiligen Keilschiebers sind als jeweils einstückige Formteile, insbesondere als Kunststoff-Sprüzgussteile ausgebildet.

In allen Ausführungen weist der Keilschieber 26 bzw. das Schieberteil 46 für seine Bewegung aus der Riegelstellung in die Freigabestellung einen Betätigungsangriff 62 insbesondere in Form einer schlitzförmigen Aufnahmeöffnung für ein Lösewerkzeug, beispielsweise einen Schraubendreher, auf.

Im Zusammenhang mit der Erfindung können eigentlich beliebige Ausführungen für das Halteelement 16 vorgesehen sein. Allgemein ist das Halteelement 16 insbesondere aus Federstahl und ringförmig mit einer an einer Umfangsstelle vorgesehenen, durchgehenden Schlitzunterbrechung 64 (siehe Fig. 6 und 14) und dadurch federelastisch radial verformbar ausgebildet. Hierbei sitzt das ringförmige Halteelement 16 mit einer radial nach innen gerichteten Federvorspannung auf dem Steckerschaft 4. In der Lösestellung sitzt das Halteelement 16 in einer Ringvertiefung 66 des Steckerschaftes 4 (siehe Fig. 1 und 9). Durch die Relativbewegung des Steckerschaftes 4 in die Haltestellung wird das Halteelement 16 über eine Konusfläche 68 des Steckerschaftes 4 gegen seine Federvorspannung radial federelastisch gespreizt, bis es formschlüssig zwischen den Halteflächen 20, 22 sitzt. Hierzu wird insbesondere auf Fig. 2 und 10 sowie auch auf Fig. 18 verwiesen.

In der Ausführungsform gemäß Fig. 1 bis 8 ist das Halteelement 16 beispielhaft von einem Drahtsprengring 70 aus einem Federdraht mit bevorzugt kreisförmigem Ringquerschnitt gebildet. Hierzu wird insbesondere auf die gesonderte Darstellung in Fig. 6 verwiesen. Bei dieser Ausführung ist zur mittelbaren Anlage des Keilschiebers 26 zwischen diesem und dem Drahtsprengring 70 ein zusätzliches, zwecks Montage ebenfalls geschlitztes Hülsenelement 72 angeordnet (siehe Fig. 7). Dieses Hülsenelement 72 greift zur Anlage an dem Drahtsprengring 70 mit einem axialen Ringabschnitt 74 in die Aufnahmeöffnung 6 ein. Der Ringabschnitt 74 geht nach außen in einen radialen Anlagesteg 76 über, der zur Anlage des Keilschiebers 26 dient. Hierzu wird insbesondere auf die Schnittdarstellungen in Fig. 1 und 2 verwiesen.

Bei der zweiten Ausführungsform gemäß Fig. 9 bis 18 ist das Halteelement 16 - siehe dazu insbesondere Fig. 14 - von einem einstückig aus Metallblech geformten Haltering 78 gebildet. Dieser als Ringstreifen kreisförmig gebogene Haltering 78 weist auf einer Axialseite mehrere über den Umfang verteilt angeordnete Halteabschnitte 80 und auf der anderen Axialseite einen Betätigungsabschnitt 82 zur unmittelbaren Anlage des Keilschiebers 26 auf. Zweckmäßig besteht der Betätigungsabschnitt 82 aus mehreren einstückigen Ansatzteilen 84, die sich ausgehend von dem Haltering 78 sternförmig in einer radialen Ebene nach außen erstrecken. Dabei ist es weiterhin zweckmäßig, wenn die Ansatzteile 84 und die Halteabschnitte 80 mit gleicher Anzahl einander jeweils paarweise axial gegenüberliegen.

Die Halteabschnitte 80 erstrecken sich von dem Haltering 78 ausgehend axial in Einsteckrichtung des Steckerschaftes 4 sowie schräg radial nach außen. Dementsprechend sind bei dieser Ausführung auch die Halteflächen 20, 22 als angepasste (konische) Schrägflächen ausgebildet. Für die meisten Anwendungen wird eine Anzahl von mindestens drei bis vier Halteabschnitten 80 günstig sein. Vorzugsweise können acht bis vierzehn, wie dargestellt beispielsweise zwölf Halteabschnitte 80 insbesondere in einer radialsymmetrischen Umfangsverteilung vorgesehen sein.

Es ist weiterhin vorteilhaft, wenn die Halteabschnitte 80 verstärkt ausgebildet sind, und zwar insbesondere durch spaltfreies Umlegen des Blechmaterials, so dass die Halteabschnitte 80 eine doppelte Materialdicke aufweisen und dadurch sehr stabil ausgebildet sind.

Weiterhin bildet der Haltering 78 jeweils zwischen den axial gegenüberliegenden Halteabschnitten 80 und Ansatzteilen 84 diese in Umfangsrichtung verbindende Verbindungsabschnitte. In bevorzugter Ausgestaltung ist der Haltering 78 derart ausgebildet, dass er bei seinen radialen, federelastischen Verformungsbewegungen stets zumindest angenähert einer Kreisform entspricht. Dadurch wird erreicht, dass sich der Haltering 78 in allen Funktionsstellungen in Umfangsrichtung praktisch spaltfrei an den Steckerschaft 4 anschmiegt, wobei auch der Steckerschaft 4 in jedem Bereich seiner axialen Länge einen kreisförmigen Außenquerschnitt aufweist. Für diese bevorzugte Ausgestaltung weist der Haltering 78 eine sich über seinen Umfangsverlauf derart verändernde radiale Biegeelastizität auf, dass er in jeder Stellung innerhalb seines federelastischen Verformungsbereiches eine Kreisform mit über den Umfang hinweg im Wesentlichen konstantem Krümmungsradius aufweist. Durch diese vorteilhafte Ausgestaltung liegen auch die Halteabschnitte 80 bei ihren radialen Bewegungen stets auf einem gemeinsamen Kreis. Für die über den Umfangsverlauf unterschiedliche Biegeelastizität ist der Haltering 78 im Bereich der Verbindungsabschnitte mit unterschiedlichen Querschnitten, insbesondere unterschiedlicher axialer Breite bei gleicher radialer Materialdicke, ausgebildet. Hierzu wird auf Fig. 14 verwiesen.

In weiterer bevorzugter Ausgestaltung ist der Haltering 78 zumindest in seinen in einen Anlagekontakt mit benachbarten Bestandteilen gelangenden Bereichen gratfrei ausgebildet. Hierdurch wird eine Reduzierung der Reibung bei den funktionsbedingten Bewegungen des Halteelementes 16 erreicht. Der Haltering 78 kann als Stanzbiegeteil auf eine bestimmte Weise so hergestellt werden, dass Grate nur dort entstehen, wo sie nicht stören, d. h. nur in solchen Bereichen, die nicht in einen Anlagekontakt mit benachbarten Bestandteilen gelangen können. Alternativ oder zusätzlich können Grate auch durch einen Prägevorgang entfernt bzw. wegverformt werden. Schließlich können Grate auch durch eine separate Entgratbehandlung entfernt werden.

Abschließend soll an Hand der Fig. 16 bis 18 noch kurz die Funktion der erfindungsgemäßen Steckverbindung erläutert werden. Gemäß Fig. 16 kann der Steckerschaft 4 zusammen mit dem sich in der Lösestellung befindenden Halteelement 16 in die Aufnahmeöffnung 6 eingesteckt werden (Pfeilrichtung 86). Der Keilschieber 26 befindet sich dabei natürlich in seiner Freigabestellung. Das Einstecken wird - bevorzugt durch Anlage des Keilschiebers 26 am Gehäuseteil 8 - begrenzt. In dieser Stellung wird gemäß Fig. 17 der Keilschieber 26 bzw. das Schieberteil 46 manuell radial in Pfeilrichtung 32 eingeschoben, wodurch zwangsweise das Steckerteil 2 in Pfeilrichtung 30 zurückgezogen wird. Dadurch wird über die Konusfläche 68 das Halteelement 16 radial gespreizt und in seine Haltestellung gemäß Fig. 18 gebracht. Diese Stellung wird formschlüssig durch den Keilschieber 26 verriegelt. Soll nun ausgehend von der verriegelten Verbindungslage gemäß Fig. 18 das Steckerteil 2 gelöst werden, so wird dazu der Keilschieber 26 bzw. das Schieberteil 46 mittels eines geeigneten Werkzeugs in Pfeilrichtung 88 in seine Freigabestellung bewegt. Dadurch kann dann der Steckerschaft 4 in Pfeilrichtung 90 weiter in die Aufnahmeöffnung 6 eingeschoben werden, wodurch das Halteelement 16 über die Konusfläche 68 wieder in den Bereich der Ringvertiefung 66 gelangt und sich dadurch radial nach innen verengt. Es ist dann wieder der Zustand gemäß Fig. 16 erreicht, so dass das Steckerteil 2 entgegen der Pfeilrichtung 86 entnommen werden kann.

Die Erfindung ist nicht auf die dargestellten und beschriebenen Ausführungsbeispiele beschränkt, sondern umfasst auch alle Ausführungen im Sinne der Erfindung nach Anspruch 1. Vor allem können die Ausführungen des Halteelementes 16 und des Keilschiebers 26 beliebig miteinander kombiniert werden. Beispielsweise kann bei der ersten Ausführung gemäß Fig. 1 bis 7 auch ein zweiteiliger Keilschieber gemäß Fig. 9 bis 18 bzw. bei der zweiten Ausführung gemäß Fig. 9 bis 18 ein Drahtsprengring 70 mit Hülsenelement 72 gemäß Fig. 1 bis 7 verwendet werden. Bei einer Ausführung, bei der als Halteelement 16 ein Drahtsprengring 70 oder ein gleichartiger geschlitzter Federring sowie ein zweiteiliger Keilschieber 26 vorgesehen ist, kann dessen Festteil 44 einteilig mit einem axialen Hülsenansatz zur Anlage an dem Halteelement 16 ausgebildet sein, so dass das oben beschriebene gesonderte Hülsenelement 72 entfallen kann.

## Patentansprüche

1. Steckverbindung für Fluid-Leitungen, mit einem Steckerteil (2), das mit einem Steckerschaft (4) umfangsgemäß abgedichtet in Richtung einer Steckachse (X) in eine Aufnahmeöffnung (6) eines Gehäuseteils (8) einsteckbar ist, und mit einer Verriegelungseinrichtung zum lösbaren Arretieren des Steckerteils (2) in seiner eingesteckten Verbindungslage, wobei die Verriegelungseinrichtung aus einem auf dem Steckerschaft (4) angeordneten, radial verformbaren Halteelement (16) und einem Verriegelungselement (18) besteht, wobei das Halteelement (16) und der Steckerschaft (4) in axialer Richtung relativ zueinander derart zwischen einer Lösestellung und einer Haltestellung bewegbar sind, dass der Steckerschaft (4) - entweder in der Lösestellung in die Aufnahmeöffnung (6) einführbar oder aus der Aufnahmeöffnung (6) entnehmbar ist - oder in der Haltestellung formschlüssig in seiner Verbindungslage arretierbar ist, indem das Halteelement (16) zumindest bereichsweise formschlüssig zwischen korrespondierenden Halteflächen (20, 22) der Aufnahmeöffnung (6) und des Steckerschaftes (4) sitzt, und wobei das Verriegelungselement (18) in einer Riegelstellung die axiale Relativbewegung zwischen dem Halteelement (16) und dem Steckerschaft (4) in der Haltestellung gegen ein Überführen in die Lösestellung formschlüssig blockiert, **dadurch gekennzeichnet, dass** das Verriegelungselement (18) relativ zu dem Steckerteil (2) zwischen einer Freigabestellung und der Riegelstellung beweglich sowie derart ausgebildet ist, dass es während der Bewegung von der Freigabestellung in die Riegelstellung auch als Antriebselement für eine Zwangsbewegung von Halteelement (16) und Steckerschaft (4) aus deren Lösestellung in deren Haltestellung fungiert.

2. Steckverbindung nach Anspruch 1,
**dadurch gekennzeichnet, dass** das Verriegelungselement (18) als ein auf dem Steckerteil (2) in einem axial zwischen dem Halteelement (16) und einem Widerlagerelement (24) des Steckerteils (2) liegenden Bereich quer zur Steckachse (X) verschiebbarer Keilschieber (26) ausgebildet ist, der für die Zwangsbewegung über eine Keilfläche (28) einen axialen Abstand zwischen dem Halteelement (16) und dem Widerlagerelement (24) vergrößert.

3. Steckverbindung nach Anspruch 2,
**dadurch gekennzeichne**t, **dass** derKeilschieber(26)als einteiliges Formteil und zum Aufsetzen auf das Steckerteil (2) im Wesentlichen U-förmig mit einer das Steckerteil (2) aufnehmenden Schlitzöffnung (34) ausgebildet ist.

4. Steckverbindung nach Anspruch 3,
**dadurch gekennzeichnet, dass** der einteilige Keilschieber (26) einseitig eine Anlagefläche (36) zur Anlage an dem Halteelement (16) und vorzugsweise auch an einer die Aufnahmeöffnung (6) umschließenden Stirnfläche (38) des Gehäuseteils (8) sowie anderseitig die Keilfläche (28) zur Anlage an dem Widerlagerelement (24) des Steckerteils (2) und vorzugsweise eine sich an die Keilfläche (28) anschließende, zur gegenüberliegenden Anlagefläche (36) parallele Haltefläche (40) aufweist.

5. Steckverbindung nach Anspruch 4,
**dadurch gekennzeichnet, dass** die Schlitzöffnung (34) des Keilschiebers (26) im Bereich der Haltefläche (40) eine Erweiterung (42) aufweist, die in der Riegelstellung rastend mit dem Steckerteil (2) zusammenwirkt.

6. Steckverbindung nach Anspruch 2,
**dadurch gekennzeichnet, dass** der Keilschieber (26) zweiteilig aus einem mit einer Lochöffnung (48) unverlierbar auf dem Steckerteil (2) sitzenden Festteil (44) und einem querbeweglichen Schieberteil (46) besteht, wobei das Festteil (44) und das Schieberteil (46) mit korrespondierenden Keilflächen (28b, 28c) aneinanderliegen.

7. Steckverbindung nach Anspruch 6,
**dadurch gekennzeichnet, dass** das Festteil (44) und das Schieberteil (46) gegenüberliegende, zueinander parallele Anlageflächen (52, 54) zur Anlage einerseits an dem Halteelement (16) und vorzugsweise auch an einer die Aufnahmeöffnung (6) umschließenden Stirnfläche (38) des Gehäuseteils (8) sowie andererseits an dem Widerlagerelement (24) des Steckerteils (2) aufweisen.

8. Steckverbindung nach Anspruch 6 oder 7,
**dadurch gekennzeichnet, dass** das Schieberteil (46) insbesondere über Rastmittel (50) unverlierbar an dem Festteil (44) und/oder an dem Steckerteil (2) gehalten ist.

9. Steckverbindung nach einem der Ansprüche 6 bis 8,
**dadurch gekennzeichnet, dass** das Schieberteil (46) mit einer Schlitzöffnung (58) auf dem Steckerteil (2) sitzt, wobei vorzugsweise die Schlitzöffnung (58) zwei Erweiterungen (60) aufweist, die jeweils in der Freigabestellung oder in der Riegelstellung zur Fixierung rastend mit dem Steckerteil (2) zusammenwirken.

10. Steckverbindung nach einem der Ansprüche 2 bis 9,
**dadurch gekennzeichnet, dass** derKeilschieber(26,46)für seine Bewegung aus der Riegelstellung in die Freigabestellung einen Betätigungsangriff (62) insbesondere in Form einer Aufnahmeöffnung für ein Lösewerkzeug aufweist.

11. Steckverbindung nach einem der Ansprüche 1 bis 10,
**dadurch gekennzeichnet, dass** das Halteelement (16) ringförmig mit einer an einer Umfangsstelle vorgesehenen durchgehenden Schlitzunterbrechung (64) und dadurch federelastisch radial verformbar ausgebildet ist, wobei das ringförmige Halteelement (16) zumindest in der Haltestellung mit einer radial nach innen gerichteten Federvorspannung auf dem Steckerschaft (4) sitzt.

12. Steckverbindung nach einem der Ansprüche 1 bis 11,
**dadurch gekennzeichnet, dass** das Halteelement (16) in der Lösestellung in einer Ringvertiefung (66) des Steckerschaftes (4) sitzt und bei der Relativbewegung in die Haltestellung über eine Konusfläche (68) des Steckerschaftes (4) radial federelastisch gespreizt wird.

13. Steckverbindung nach einem der Ansprüche 2 bis 12,
**dadurch gekennzeichnet, dass** dasHalteelement(16)von einem Drahtsprengring (70) gebildet ist, wobei zur mittelbaren Anlage des Keilschiebers (26) zwischen diesem und dem Drahtsprengring (70) ein zusätzliches Hülsenelement (72) angeordnet ist.

14. Steckverbindung nach einem der Ansprüche 2 bis 12,
**dadurch gekennzeichnet, dass** dasHalteelement(16)von einem einstückig aus Metallblech geformten Haltering (78) gebildet ist, wobei der Haltering (78) auf einer Axialseite mehrere über den Umfang verteilt angeordnete Halteabschnitte (80) und auf der anderen Axialseite einen Betätigungsabschnitt (82) zur unmittelbaren Anlage des Keilschiebers (26) aufweist.

## Claims

1. Plug connection for fluid conduits, comprising a connector part (2), which can be inserted with a connector shaft (4) in a manner sealed around the periphery into a receiving opening (6) of a housing part (8) in the direction of a plug axis (X), and comprising a locking device for releasably arresting the connector part (2) in the inserted connection position thereof, the locking device comprising a radially deformable retaining element (16) arranged on the connector shaft (4) and a locking element (18), the retaining element (16) and the connector shaft (4) being movable in the axial direction relative to each other between a releasing position and a retaining position such that the connector shaft (4) - either in the releasing position can be inserted into the receiving opening (6) or can be removed from the receiving opening (6) - or in the retaining position can be arrested in a form-locking manner in the connection position thereof, in that the retaining element (16) is seated at least in some regions in a form-locking manner between corresponding retaining surfaces (20, 22) of the receiving opening (6) and the connector shaft (4), and the locking element (18), in a locking position, blocking in a form-locking manner the axial relative movement between the retaining element (16) and the connector shaft (4) in the retaining position to prevent a move into the releasing position,
**characterised in that** the locking element (18) can be moved relative to the connector part (2) between a freeing position and the locking position and is configured such that during the movement from the freeing position into the locking position it also acts as a driving element for a forced movement of the retaining element (16) and connector shaft (4) from their releasing position into their retaining position.

2. Plug connection according to Claim 1,
**characterised in that** the locking element (18) is configured as a wedge slide (26) which is displaceable on the connector part (2), transversely with respect to the plug axis (X), in a region lying axially between the retaining element (16) and an abutment element (24) of the connector part (2) and which, for the forced movement, increases an axial distance between the retaining element (16) and the abutment element (24) via a wedge surface (28).

3. Plug connection according to Claim 2,
**characterised in that** the wedge slide (26) is configured as a one-piece moulded part and for placing onto the connector part (2) is of substantially U-shaped configuration with a slot opening (34) receiving the connector part (2).

4. Plug connection according to Claim 3,
**characterised in that** the one-piece wedge slide (26) has, on one side, a bearing surface (36) for bearing on the retaining element (16) and preferably also on an end face (38), surrounding the receiving opening (6), of the housing part (8), and, on the other side, the wedge surface (28) for bearing on the abutment element (24) of the connector part (2) and preferably a retaining surface (40) adjoining the wedge surface (28) and parallel to the opposite bearing surface (36).

5. Plug connection according to Claim 4,
**characterised in that** the slot opening (34) of the wedge slide (26) has, in the region of the retaining surface (40), an enlargement (42) which, in the locking position, cooperates in a latching manner with the connector part (2).

6. Plug connection according to Claim 2,
**characterised in that** the wedge slide (26) is composed of two parts - a fixed part (44) seated with a hole opening (48) captively on the connector part (2) and a transversely movable slide part (46), the fixed part (44) and the slide part (46) bearing with corresponding wedge surfaces (28b, 28c) against each other.

7. Plug connection according to Claim 6,
**characterised in that** the fixed part (44) and the slide part (46) have opposite, mutually parallel bearing surfaces (52, 54) for bearing, on the one hand, on the retaining element (16) and preferably also on an end face (38), surrounding the receiving opening (6), of the housing part (8), and, on the other hand, on the abutment element (24) of the connector part (2).

8. Plug connection according to Claim 6 or 7,
**characterised in that** the slide part (46) is retained captively on the fixed part (44) and/or on the connector part (2), in particular via latching means (50).

9. Plug connection according to one of Claims 6 to 8,
**characterised in that** the slide part (46) is seated with a slot opening (58) on the connector part (2), the slot opening (58) preferably having two enlargements (60) which each cooperate, in the freeing position or in the locking position, in a latching manner with the connector part (2) for fixing purposes.

10. Plug connection according to one of Claims 2 to 9,
**characterised in that** the wedge slide (26, 46) has, for its movement from the locking position into the freeing position, an actuating engagement point (62), in particular in the form of a receiving opening for a releasing tool.

11. Plug connection according to one of Claims 1 to 10,
**characterised in that** the retaining element (16) is of ring-shaped configuration with a through slot interruption (64) provided at a peripheral location and is thereby spring-elastically radially deformable, the ring-shaped retaining element (16) being seated with a radially inwardly directed spring prestress on the connector shaft (4), at least in the retaining position.

12. Plug connection according to one of Claims 1 to 11,
**characterised in that** the retaining element (16) is seated, in the releasing position, in an annular indentation (66) of the connector shaft (4) and upon the relative movement is spread radially spring-elastically into the retaining position via a conical surface (68) of the connector shaft (4).

13. Plug connection according to one of Claims 2 to 12,
**characterised in that** the retaining element (16) is formed by a wire spring ring (70), an additional sleeve element (72) being arranged between the wedge slide (26) and the wire spring ring (70) for indirect contact of the wedge slide (26).

14. Plug connection according to one of Claims 2 to 12,
**characterised in that** the retaining element (16) is formed by a retaining ring (78) formed in one piece from sheet metal, the retaining ring (78) having, on one axial side, a plurality of retaining sections (80) arranged distributed over the periphery and, on the other axial side, an actuating section (82) for direct contact of the wedge slide (26).

## Revendications

1. Raccord à emboîtement pour conduites de fluide, comportant une partie enfichable (2), qui peut être enfichée dans le sens d'un axe d'emboîtement (X), à l'aide d'une tige enfichable (4), dans une ouverture de réception (6) d'une partie de boîtier (8), et de manière étanche au niveau la périphérie, et comportant un dispositif de verrouillage permettant de bloquer de manière libérable la partie enfichable (2) dans sa position de connexion enfichée, dans lequel le dispositif de verrouillage se compose d'un élément de retenue (16) pouvant être déformé radialement, disposé sur la tige enfichable (4) et d'un élément de verrouillage (18), l'élément de retenue (16) et la tige enfichable (4) pouvant être déplacés dans une direction axiale l'un par rapport à l'autre entre une position de desserrage et une position de retenue de telle sorte que la tige enfichable (4) peut être soit introduite dans l'ouverture de réception (6) dans la position de desserrage, soit retirée de l'ouverture de réception (6) ou encore peut être arrêtée dans la position de retenue par complémentarité de forme dans sa position de connexion, tandis que l'élément de retenue (16) est calé au moins par endroits, par complémentarité de forme entre des surfaces de retenue (20, 22) de l'ouverture de réception (6) et de la tige enfichable (4) qui correspondent, dans lequel que l'élément de verrouillage (18) bloque dans une position de verrouillage le déplacement axial relatif entre l'élément de retenue (16) et la tige enfichable (4) dans la position de retenue pour éviter tout passage à une position de desserrage,
**caractérisé en ce que** l'élément de verrouillage (18) est réalisé de manière mobile par rapport à la tige enfichable (2), entre une position de déverrouillage et une position de verrouillage, de telle sorte qu'il sert également d'élément d'entraînement pour un déplacement forcé de l'élément de retenue (16) et de la tige enfichable (4) hors de leur position de desserrage dans leur position de retenue pendant le déplacement de la position de déverrouillage dans la position de verrouillage.

2. Raccord à emboîtement selon la revendication 1,
**caractérisé en ce que** l'élément de verrouillage (18) est réalisé sous la forme d'un robinet à vanne (26) pouvant être coulissé sur la partie enfichable (2) dans une zone se trouvant entre l'élément de retenue (16) et un élément de butée (24) de la partie enfichable (2) de manière transversale par rapport à l'axe d'emboîtement (X), lequel robinet à vanne augmente une distance axiale entre l'élément de retenue (16) et l'élément de butée (24) pour le déplacement forcé sur une face de clavette (28).

3. Raccord à emboîtement selon la revendication 2,
**caractérisé en ce que** le robinet à vanne (26) est réalisé soue la forme d'une partie moulée monobloc et de manière à présenter essentiellement une forme en U avec une ouverture en fente (34) recevant la partie enfichable (2) pour être placé sur la partie enfichable (2).

4. Raccord à emboîtement selon la revendication 3,
**caractérisé en ce que** le robinet à vanne (26) monobloc présente d'un côté une face d'appui (36) destinée à venir en appui sur l'élément de retenue (16) et de préférence également sur une face frontale (38) de la partie de boîtier (8) entourant l'ouverture de réception (6), ainsi que de l'autre côté une face de clavette (28) destinée à venir en appui sur l'élément de butée (24) de la partie enfichable (2), et de préférence une face de retenue (40) se raccordant à la face de clavette (28), parallèle par rapport à la face d'appui (36) opposée.

5. Raccord à emboîtement selon la revendication 4,
**caractérisé en ce que** l'ouverture en fente (34) du robinet à vanne (26) présente dans la zone de la face de retenue (40) un élargissement (42) qui coopère dans la position de verrouillage de manière encliquetable avec la partie enfichable (2).

6. Raccord à emboîtement selon la revendication 2,
**caractérisé en ce que** le robinet à vanne (26) se compose de deux parties, d'une partie fixe (44) avec un trou d'ouverture (48) montée de manière captive sur la partie enfichable (2) et d'une partie coulissante (46) mobile transversalement, dans lequel la partie fixe (44) et la partie coulissante (46) reposent l'une contre l'autre avec des faces de clavette (28b, 28c) qui correspondent.

7. Raccord à emboîtement selon la revendication 6,
**caractérisé en ce que** la partie fixe (44) et la partie coulissante (46) présentent des faces d'appui (52, 54) se faisant face, parallèles entre elles, destinées à venir en appui d'un côté sur l'élément de retenue (16) et de préférence également sur une face frontale (38) de la partie de boîtier (8) entourant l'ouverture de réception (6) ainsi que d'un autre côté sur l'élément de butée (24) de la partie enfichable (2).

8. Raccord à emboîtement selon la revendication 6 ou 7,
**caractérisé en ce que** la partie coulissante (46) est retenue en particulier par l'intermédiaire de moyens d'arrêt (50) de manière captive sur la partie fixe (44) et/ou sur la partie enfichable (2).

9. Raccord à emboîtement selon l'une quelconque des revendications 6 à 8, **caractérisé en ce que** la partie coulissante (46) est calée avec l'ouverture en fente (58) sur la partie enfichable (2), l'ouverture en fente (58) présentant de préférence deux élargissements (60), lesquels coopèrent respectivement dans la position de déverrouillage ou dans la position de verrouillage, pour la fixation de manière encliquetable à la partie enfichable (2).

10. Raccord à emboîtement selon l'une quelconque des revendications 2 à 9, **caractérisé en ce que** le robinet à vanne (26, 46) présente pour son déplacement de la position de verrouillage à la position de déverrouillage une attaque d'actionnement (62) en particulier sous la forme d'une ouverture de réception pour un outil de desserrage.

11. Raccord à emboîtement selon l'une quelconque des revendications 1 à10, **caractérisé en ce que** l'élément de retenue (16) est réalisé de manière à présenter une forme annulaire avec une rupture en fente (64) continue prévue à un endroit périphérique et est ainsi réalisé de manière à pouvoir être déformé élastiquement radialement, dans lequel l'élément de retenue (16) de forme annulaire est calé au moins dans la position de retenue sur la tige enfichable (4) avec une précontrainte de ressort orientée radialement vers l'intérieur.

12. Raccord à emboîtement selon l'une quelconque des revendications 1 à 11, **caractérisé en ce que** l'élément de retenue (16) est calé dans la position de desserrage dans un creux annulaire (66) de la tige enfichable (4) et est écarté, lors du déplacement relatif dans la position de retenue, de manière élastique et radiale par une surface conique (68) de la tige enfichable (4).

13. Raccord à emboîtement selon l'une quelconque des revendications 2 à 12, **caractérisé en ce que** l'élément de retenue (16) est formé par un anneau de retenue métallique (70), dans lequel, pour l'agencement indirect du robinet à vanne (26), un élément à douille (72) supplémentaire est disposé entre le robinet à vanne et l'anneau de retenue métallique (70).

14. Raccord à emboîtement selon l'une quelconque des revendications 2 à 12, **caractérisé en ce que** l'élément de retenue (16) est formé par un anneau de retenue (78) moulé d'un seul tenant à partir d'une tôle métallique, dans lequel l'anneau de retenue (78) présente sur un côté axial, plusieurs sections de retenue (80) disposées de manière répartie sur la périphérie, et sur l'autre côté axial, une section d'actionnement (82) destinée à agencer directement le robinet à vanne (26).
